# EUROPEAN PATENT APPLICATION

(11) **EP 4 465 701 A1**
(43) Date of publication of application: **20.11.2024**
(21) Application number: 24175022.3
(22) Date of filing: 09.05.2024
(51) Int. Cl.: H04W 48/14, H04W 84/12

(54) **ESTABLISHING AN ASSOCIATION IN A DATA NETWORK**

(30) Priority: 09.05.2023 IN 202341032702; 15.11.2023 US 202318510303
(71) Applicant: Cambium Networks Ltd, Ashburton, Devon TQ13 7UP (GB)
(72) Inventor: NAGANNA, Jayaprakasha Guddenahalli, 560037 Bangalore (IN); REDDY, Geereddy Anil Kumar, 560037 Bangalore (IN); MIRANDA, Trevor, San Francisco, CA (US); SALAM, Azif Abdul, San Jose, CA (US); DHYANI, Prabhash, 560037 Bangalore (IN)
(74) Representative: EIP

(57) **Abstract**

A wireless network comprises a plurality of wireless clients and an access point (101), the access point having at least one BSSID basic service set identifier. Broadcast of at least a first SSID service set identifier from the access point (101) is inhibited. A first probe message is received from a first wireless client (102) at the access point carrying a first SSID service set identifier. A first request message is sent from the access point (101) to a server (103) of the access point requesting a wireless local area network profile associated with the first SSID service set identifier. A message is received carrying a first wireless local area network profile for the first SSID service set identifier at the access point (101) from the server 103. A first BSSID basic service set identifier is used to establish an association between the first wireless client (102) and the access point (101) to provide access to a wireless local area network according to the first wireless local area network profile.

## Description

### Technical Field

The present disclosure relates to a method and apparatus for establishing an association in a data network, and in particular, but not exclusively, for establishing an association between a wireless client and an access point to provide access to a wireless local area network according to a wireless local area network profile associated with a service set identifier (SSID).

### Background

A wireless data network may comprise wireless clients, for example user devices such as portable computers, and a number of access points connected to a server. The wireless data network may operate according to one or more of the IEE802.11 family of wireless local area networking standards. The data network may provide access to a wireless local area network for the wireless clients according to wireless local area network profiles, each associated with a respective service set identifier (SSID). Within the IEEE 802.11 standards, a service set identifier (SSID) is typically a natural language label that users see as a network name. The user devices that share a SSID are referred to as a service set. A service set forms a logical group of nodes operating with shared link-layer networking parameters to form one logical network segment.

The IEEE 802.11 standards also provide a basic service set identifier (BSSID), which is used to define a basic service set associated with physical layer medium access characteristics, such as radio frequency and/or modulation scheme. A BSSID is a unique number that follows MAC address conventions. The BSSID is usually non-configurable, and may be pre-set during manufacture. Each access point typically has a limited number of basic service set identifiers (BSSID) allocated to it.

The access point may broadcast a number of SSIDs that are available at the access point for connection, and a wireless client may request connection to the access point according to a wireless local area network profile associated with a SSID. Conventionally, the access point has a basic service set identifier (BSSID), typically a MAC address, for each SSID for use in establishing an association between a wireless client and an access point to provide access to a wireless local area network according to a wireless local area network profile for the SSID. However, the number of BSSIDs available at an access point is typically limited, and so the number of SSIDs available at an access point may also be limited.

### Summary

In accordance with a first aspect there is provided a method of operation of a wireless network comprising a plurality of wireless clients and an access point, the access point having at least one basic service set identifier (BSSID), the method comprising: inhibiting broadcast of at least a first service set identifier (SSID) from the access point; receiving a first probe message from a first wireless client at the access point, the first probe message carrying a first SSID; sending a first request message from the access point to a server of the access point requesting a wireless local area network profile associated with the first SSID; receiving a message carrying a first wireless local area network profile for the first SSID at the access point from the server; and using a first BSSID to establish an association between the first wireless client and the access point to provide access to a wireless local area network according to the first wireless local area network profile.

Inhibiting the broadcast of an SSID, for example by using hidden SSID mode, causes the wireless client to send a probe message requesting connection for a specific SSID, and in response to receiving the probe message, the access point sends a request message to the server requesting a wireless local area network profile associated with the specific SSID. Sending the request message to the server allows the number of SSIDs available at the access point to be increased beyond the SSIDs for which local area network profiles associated with each SSID are held at the access point.

In an example, the method comprises: inhibiting broadcast of at least a second SSID from the access point; receiving a second probe message from a second wireless client at the access point, the second probe message carrying a second SSID; sending a second request message from the access point to a server of the access point requesting a wireless local area network profile associated with the second SSID; receiving a message carrying a second wireless local area network profile for the second SSID at the access point from the server; and using the first BSSID to establish an association between the second wireless client and the access point to provide access to a wireless local area network according to the second wireless local area network profile.

Using the same BSSID to establish the associations for the first and second SSIDs allows the number of SSIDs available at an access point to exceed the number of available BSSIDs at the access point.

In an example, the method comprises inhibiting broadcast of at least the first and second SSID service set identifiers by using hidden SSID mode.

This is a convenient way of avoiding broadcast of SSIDs to prompt wireless clients to send probe messages.

In an example, the access point is an access point for at least part of a multi-dwelling building and the server is a server for the multi-dwelling building.

The method allows a user of a wireless client to move to different areas of the multi-dwelling building, such as communal areas, while using the same SSID and the associated services and security settings for the SSID, as would be used for the access point in the user's home. The number of SSIDs available for the building may exceed the number of BSSIDs available at an access point.

In an example, the wireless local area network profile contains details of a security code for access to a service associated with a SSID. The security code is a passphrase.

In accordance with a second aspect there is provided an access point for a wireless network comprising a plurality of wireless clients and the access point, the access point having at least one basic service set identifier (BSSID), and the access point comprising one or more processors configured to cause the access point: in dependence on receiving a first probe message from a first wireless client, the first probe message carrying a first service set identifier (SSID); in dependence on receiving a message carrying a first wireless local area network profile for the first SSID from the server, to use a first BSSID to establish an association between the first wireless client and the access point to provide access to a wireless local area network according to the first wireless local area network profile.

In accordance with a third aspect there is provided a non-transitory computer readable storage medium storing instructions executable by one or more processors to cause an access point to perform the claimed method.

Further features and advantages will become apparent from the following description of examples, which is made with reference to the accompanying drawings.

### Brief Description of the Drawings

In order that the present disclosure may be more readily understood, examples will now be described, with reference to the accompanying drawings, in which:
Figure 1 is a schematic diagram showing a example of data network in an example;
Figure 2 shows an example of an exchange of messages between a user equipment (wireless client), an access point and a server in an example;
Figure 3 is a flow diagram of a method in an example;
Figure 4 is a further flow diagram of a method in an example;
Figure 5 shows an example of an exchange of messages between a first user and a first home access point and an exchange of messages between a second user and a second home access point;
Figure 6 shows an example of an exchange of messages between the first user and a common area access point and the second user and the common area access point, and between the common area access point and the cloud/server;
Figure 7 shows a further exchange of messages between the respective users, access points and the cloud/server in an example; and
Figure 8 is a schematic diagram of a data network showing an access point having a number of radio units in an example, showing examples associations between SSIDs and BSSIDs.

### Detailed Description

Examples are described in the context of of Wi-Fi networks operating according to the IEEE 802.11 family of standards with radio transceivers operating in frequency bands at approximately 2.4 GHz and 5 GHz to provide wireless local area networks for a multi-dwelling building. However, it is to be understood that embodiments of the invention are not limited to this example, and may be applied to various wireless networks, such as wireless networks providing access for users within a business, and for any other purpose, and may apply to wireless networks operating at other frequencies and according to other standards, or proprietary standards.

An example is described of wireless local area network for a multi-dwelling building, allowing a user of a wireless client to move to different areas of the multi-dwelling building, such as communal areas. In the example described the wireless client may use the same service set identifier (SSID) and the associated services and security settings for the SSID, as would be used for the access point in the user's home. Within the IEEE 802.11 standards, a service set identifier (SSID) is typically a natural language label that users see as a network name. The user devices that share a SSID are referred to as a service set. A service set forms a logical group of nodes operating with shared link-layer networking parameters to form one logical network segment.

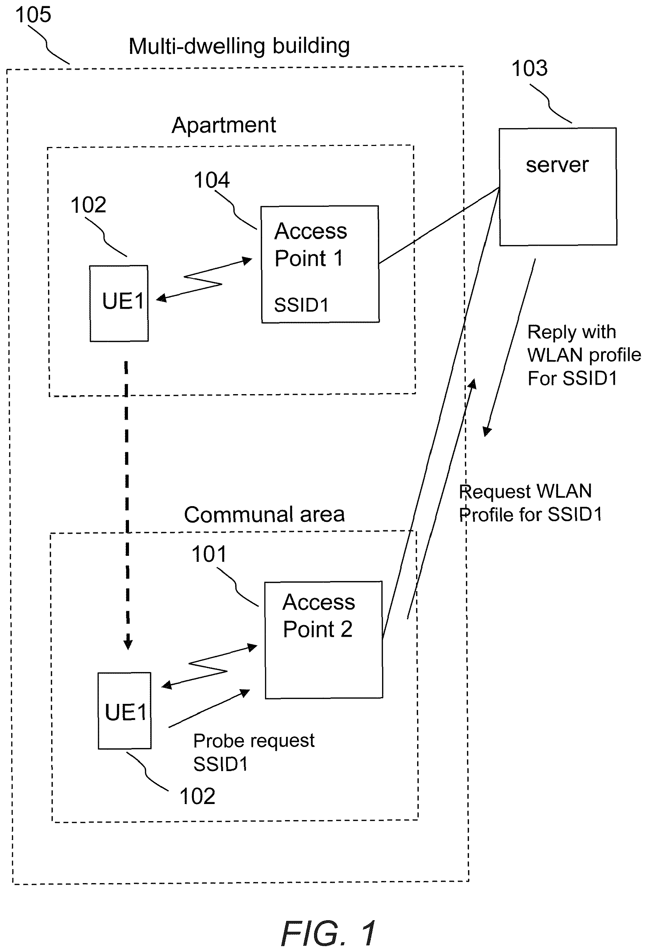

Figure 1 shows an example of a data network for a multi-dwelling building 105. The multi-dwelling building comprises a number of apartments and communal areas, each equipped with one or more access points, which are connected to a server 103 for the building, or for a larger area including the building. The server may be cloud-based server or may be physically located in the building, for example. An apartment and a communal area are shown in Figure 1, each equipped with a respective access point 104, 101. A user equipment 102, which is a wireless client, is, in this example, used by a resident of the apartment, and the access point 104 in the apartment provides access to a wireless local area network (WLAN) according to a wireless local area network profile associated with a service set identifier (SSID) for the access point. If the user moves the user equipment 102 to the communal area, the user equipment establishes an association with the access point 101 in the communal area to provide access to the same wireless local area network as would have been used in the user's apartment, according to the same wireless local area network profile associated with the SSID, including the security settings, as would be used in the user's apartment. This gives the user a seamless experience when moving from the apartment to the communal area. To establish the association with the access point 101 in the communal area, the user equipment 102 sends a probe request to the access point requesting connection to the SSID, SSID1, that is used in the apartment. The access point 101 in the communal area operates using hidden SSID mode, in which SSIDs are not broadcast. The lack of broadcast SSID prompts the user equipment 102 to send the probe request for SSID1. In response to receiving the probe request, the access point 101 sends a message to the server 103 to request the WLAN profile for the SSID1. The server then provides the WLAN profile for SSID 1 to the access point 101, which can then be used to establish an association between the access point 101 and the user equipment 102.

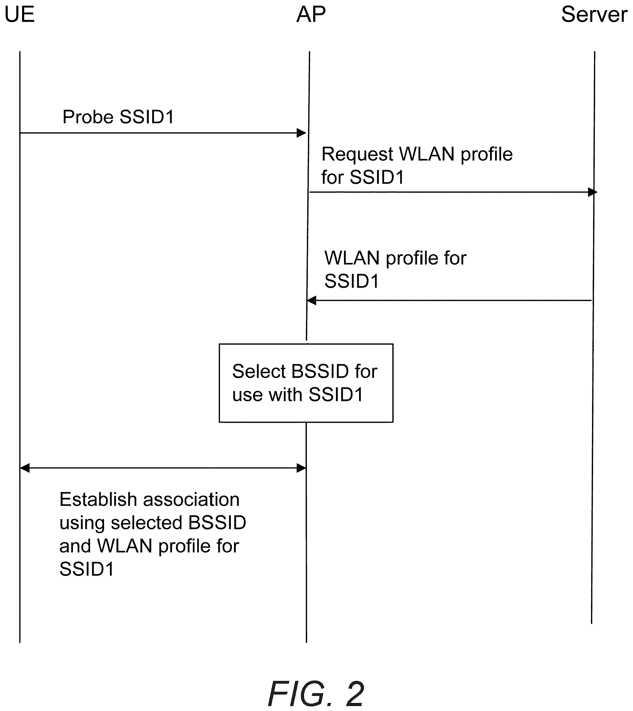

Figure 2 illustrates the exchange of messages between the user equipment, the access point and the server. The user equipment sends the probe request for SSID1 to the access point. In response, the access point requests the WLAN profile for SSID1 from the server, which sends the WLAN profile to the access point. The access point then selects a BSSID, which may be a MAC (medium access control) address allocated to the access point, for use with SSID1, and establishes an association using the selected BSSID and the WLAN profile for SSID1.

Within the IEEE 802.11 standards, a basic service set identifier (BSSID) is a unique number that follows MAC address conventions. The BSSID is usually non-configurable, and may be pre-set during manufacture. Each access point typically has a limited number of multiple basic service set identifiers (BSSID) allocated to it. A BSSID is used to define a basic service set associated with physical layer medium access characteristics, such as radio frequency and/or modulation scheme.

In examples, a BSSID may be used to establish associations for several different SSIDS. This is by contrast to a conventional approach, in which a different BSSID is used to establish a connection for each SSID. The conventional approach limits the number of SSIDs that may be used to establish associations at each access point, because a limited number of BSSIDs are allocated to each access point. For example, each radio transceiver at an access point may be allocated 16 or 32 BSSIDs, and the access point may have, for example, 2 or three radios. However, in a multi-dwelling apartment, the number of SSIDs used by the various residents may be 500 or more, and can exceed the number of BSSIDs at an access point. By selecting the same BSSID for use with different SSIDs, and retrieving the WLAN profile for an SSID from the server in response to a probe from the user equipment for a specific SSID, the limitation to the number of SSIDs that may be used by an access point is removed, so that in principle any of the users of the data network may form an association with an access point in a communal area using the SSID and profile that they normal use in their apartment.

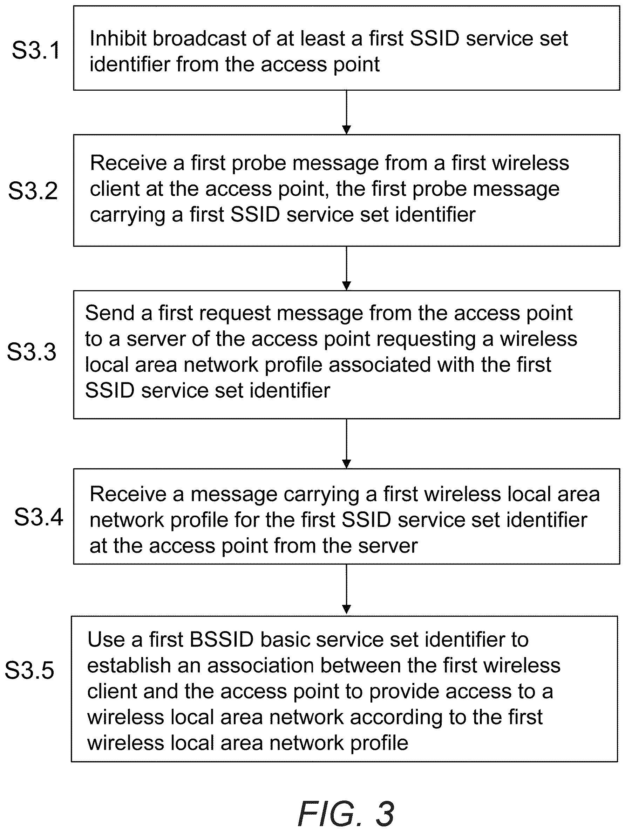

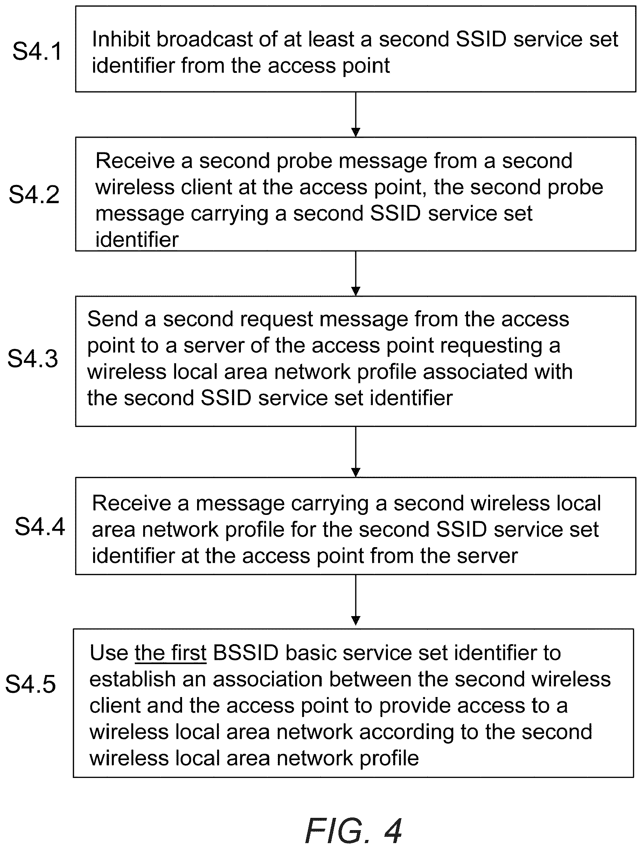

Figure 3 is a flow diagram of a method in an example according to steps S4.1 to S4.5, for establishing an association with a wireless client (user equipment) using a first SSID and a BSSID, and Figure 4 is a further flow diagram of an example, for establishing an association with second wireless client (user equipment) at the same access point using a second SSID and the same BSSID as for the first SSID. In each example, the BSSID that is used may be referred to as a "first" BSSID for ease of reference, or as a "given" BSSID.

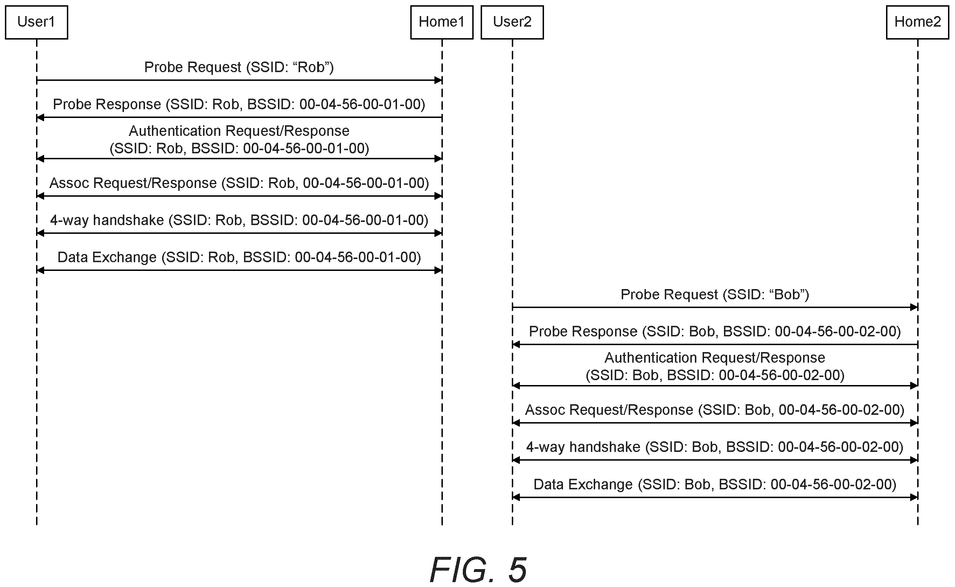

Figure 5 shows an example of an exchange of messages, between a first user and a first home access point and an exchange of messages between a second user and a second home access point to establish respective connections. In this example, the respective access points have the WLAN profile for the SSIDs requested, and an authentication handshake takes place.

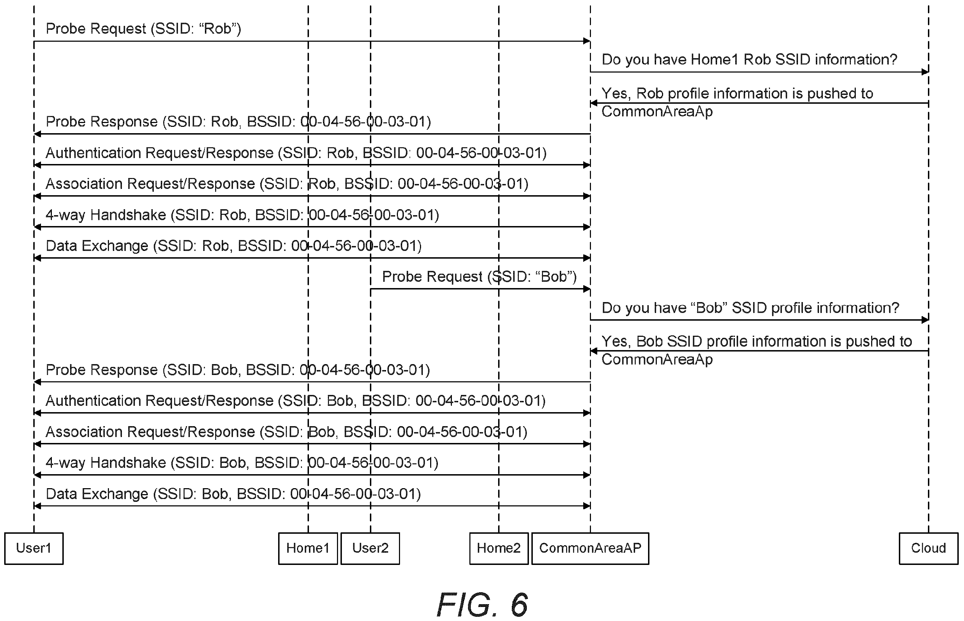

Figure 6 shows an example of an exchange of messages between the first user and a common area access point and the second user and the common area access point, and between the common area access point and the cloud/server. In this example, the access point contacts the cloud/server to request the WLAN profile information for each user, which is then provided to the common area access point so that authentication handshakes can take place. It can be seen that the same BSSID, i.e.MAC address 00-04-56-00-03-01, is used for two different users having different SSIDs.

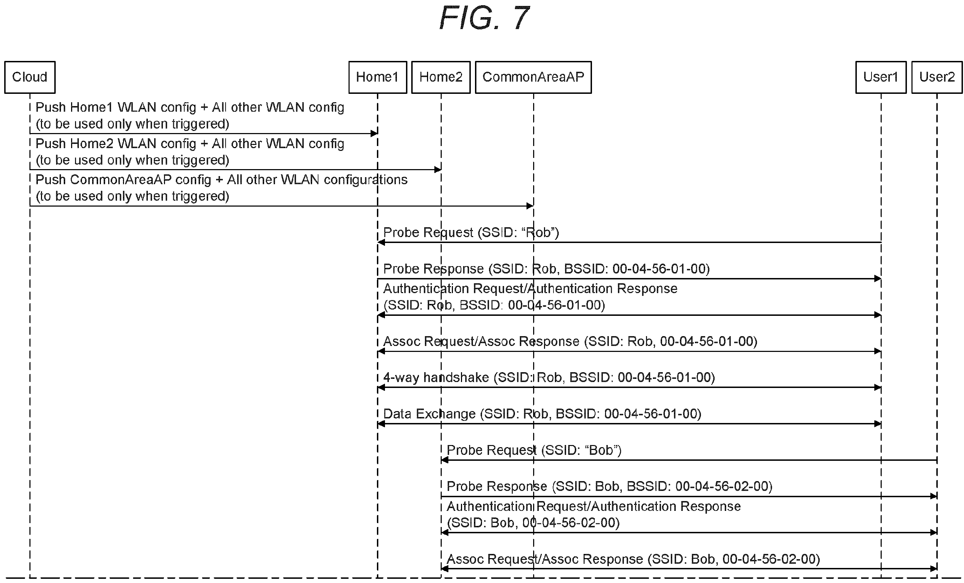

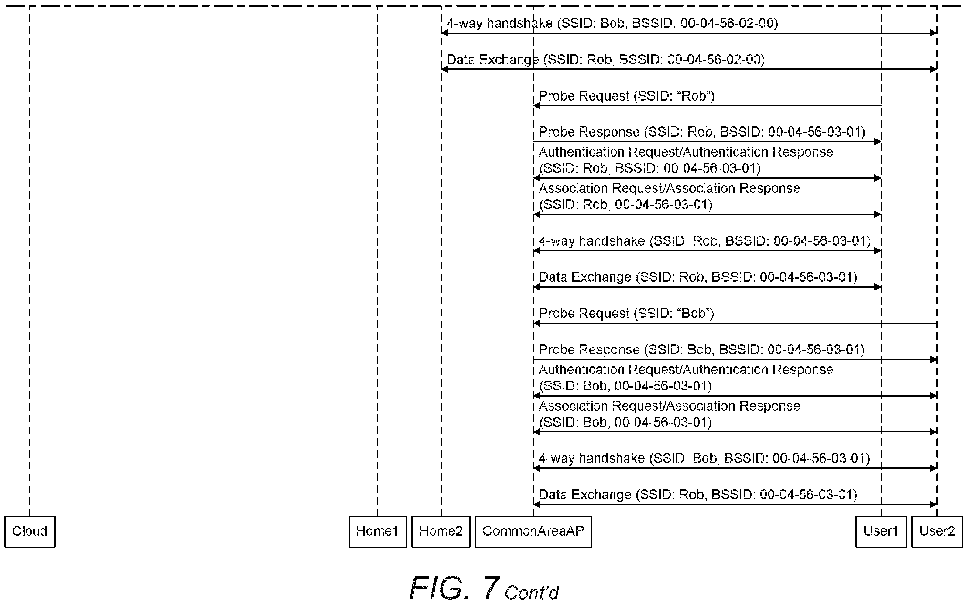

Figure 7 shows a further exchange of messages between the respective users, access points and the cloud/server in an example, showing the establishment of the respective links. It can be seen that in establishing the connection with the CommonAreaAP, User 1, requesting SSID "Rob" uses BSSID 00-04-56-00-02-00, which is the same BSSID as is used by User2, requesting SSID "Bob".

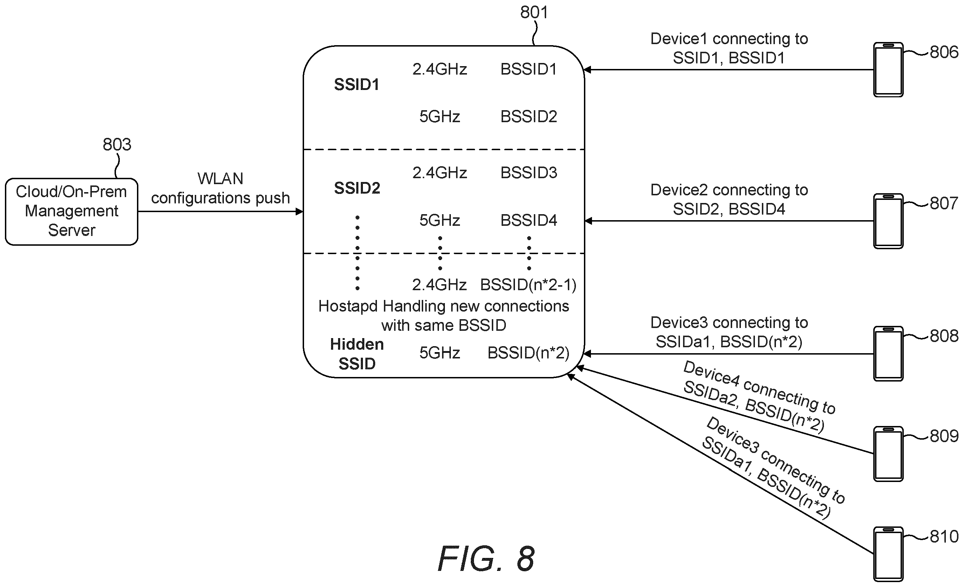

Figure 8 is a schematic diagram of a data network showing an access point having a number of radio units in an example, showing examples associations between SSIDs and BSSIDs. Access point 801, which may be, in this example, an access point in a communal area, is connected to server 803, which may be a cloud server or an on-premises server. In this example, a user device 806 is connected to a first radio at 2.4 GHz at the access point using a SSID1 and BSSID1, and a user device 807 is connected to a different radio at 5GHz at the access point using a SSID2 and BSSID4. At a third radio, at 5 GHz in this example, three user equipments 808, 809 and 810 are connected using the same BSSID (BSSIDn*2). User equipments 808 and 810 use SSIDa1, and user equipment 809 uses SSIDa2. It can be seen that the third radio at least is not limited to using a different BSSID for each SSID. This is achieved by using the hidden SSID and the methos as shown in Figures 3 and 4 and as already described.

Conventionally, an access point may have one or multiple radios on different frequencies, for example 2.4 GHz, 5 GHz or 6GHz. An SSID, which may be referred to as a network name, can be applied to single, multiple or all radios depending on the configuration. Each radio can have multiple but limited BSSIDs, which may be referred to as virtual interfaces, typically 16 or 32. Each SSID on a specific band is mapped to one BSSID and beacons are advertised with that BSSID only. When a wireless client connects to a SSID, it decides on a frequency band (2.4/5/6 GHz) to connect to and then completes the association process with the BSSID. For a wireless client association, packet exchanges happen between the client MAC and BSSID. There is a concept of "hidden SSID", where the SSID is configured but not broadcasted in beacons. Only when the client probes for the SSID, is it included in probe responses so the client knows the BSSID corresponding to this SSID on that band and can proceed with an association. In case of security enabled WLAN networks, i.e. WPA/WPA2/WPA3 security, there may be a process running inside the access point which takes care of the authentication part and generates transient keys for data encryption based on packets exchanges with same client MAC/BSSID pair.

In a conventional access point, the SSID on a band is mapped to one BSSID. That BSSID is used for beacons, probe responses and all communication with the client including authentication and generation of encryption keys. Each secure SSID will have its own passphrases and that is handled in a process running inside the access point for authentication). Accordingly, conventionally, not only is one SSID mapped to one BSSID but other features related to that WLAN profile, for example security, policies etc. are mapped to one BSSID.

Conventionally, a different BSSID is used for each SSID to allow for the case where a hidden SSID is not used. If a hidden SSID is not used, then the network can be discovered by client devices, and it is easier to connect to the SSID when it prompts for the credentials if a different BSSID is used for SSID.

In examples of the invention, the restrictions of one to one mapping of a WLAN profile and BSSID are removed. This is achieved by a process as follows, in an example. A hidden SSID is configured on an access point, so that a SSID is not broadcast in beacons. When a client sends a probe request, it asks for a specific SSID. When the access point receives this probe request, and if the SSID is not configured on this device, it contacts the server managing the access points in the data network, which may be a cloud server or an on-premises server and gets the WLAN profile matching with that SSID. Then the access point responds with same BSSID but with the SSID that client had requested in the probe request. When the client moves to authentication, the access point my also have the details of a passphrase and other policies associated with that WLAN profile. The process running inside the access point for authentication is configured to handle different passphrases with different SSIDs and same BSSID, so that the access point can handle potentially unlimited WLAN profiles with a single BSSID and hidden SSID.

In an example, 16 BSSIDs may be provided per radio, allowing 16 WLANs to be connected.

The hidden SSID mode is an option on a Wi-Fi access point. When the hidden SSID mode is not used, by default, WiFi networks typically broadcast a SSID every 100 milliseconds to let other devices know about their presence. However, when the hidden network WiFi option has been turned on in the settings (hidden SSID), this stops the broadcasting of the network's SSID. In this case, beacons may still be transmitted, but without the SSID.

By contrast to the claimed examples, in a conventional arrangement, there are different BSSIDs on an access point for each WLAN configured on a radio, with one BSSID assigned to each SSID. To accommodate the multiple BSSIDs, each access point is typically assigned a unique block of MAC addresses. The pre-assigned access point MAC address block is typically listed on a label on the access point.

It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the invention, which is defined in the accompanying claims.

## Claims

1. A method of operation of a wireless network comprising a plurality of wireless clients and an access point (101), the access point (101) having at least one BSSID basic service set identifier, the method comprising:
inhibiting broadcast of at least a first SSID service set identifier from the access point (101);
receiving a first probe message from a first wireless client (102) at the access point, the first probe message carrying a first SSID service set identifier;
sending a first request message from the access point (101) to a server (103) of the access point requesting a wireless local area network profile associated with the first SSID service set identifier;
receiving a message carrying a first wireless local area network profile for the first SSID service set identifier at the access point (101) from the server (103); and
using a first BSSID basic service set identifier to establish an association between the first wireless client (102) and the access point (101) to provide access to a wireless local area network according to the first wireless local area network profile.

2. A method according to claim 1, comprising:
inhibiting broadcast of at least a second SSID service set identifier from the access point (101);
receiving a second probe message from a second wireless client at the access point (101), the second probe message carrying a second SSID service set identifier;
sending a second request message from the access point (101) to a server (103) of the access point requesting a wireless local area network profile associated with the second SSID service set identifier;
receiving a message carrying a second wireless local area network profile for the second SSID service set identifier at the access point (101) from the server (103); and
using the first BSSID basic service set identifier to establish an association between the second wireless client and the access point (101) to provide access to a wireless local area network according to the second wireless local area network profile.

3. A method according to claim 1 or claim 2, comprising:
inhibiting broadcast of at least the first and second SSID service set identifiers by using hidden SSID mode.

4. A method according to any preceding claim, wherein the access point (101) is an access point for at least part of a multi-dwelling building and the server is a server for the multi-dwelling building.

5. A method according to any preceding claim, comprising:
receiving messages carrying wireless local area network profiles associated with a greater number of SSID service set identifiers at the access point from the server than a number of BSSID basic service set identifiers available for the access point.

6. A method according to any preceding claim, wherein the or each BSSID basic service set identifier is a predetermined MAC address of the access point.

7. A method according to any preceding claim, wherein the wireless local area network profile contains details of a security code for access to a service associated with a SSID service set identifier.

8. A method according to claim 7, wherein the security code is a passphrase.

9. An access point (101) for a wireless network comprising a plurality of wireless clients and the access point (101), the access point (101) having at least one basic service set identifier, and the access point comprising one or more processors configured to cause the access point:
in dependence on receiving a first probe message from a first wireless client (102), the first probe message carrying a first SSID service set identifier, to send a first request message to a server (103) of the access point requesting a wireless local area network profile associated with the first SSID service set identifier;
in dependence on receiving a message carrying a first wireless local area network profile for the first SSID service set identifier from the server (103), to use a first BSSID basic service set identifier to establish an association between the first wireless client (102) and the access point (101) to provide access to a wireless local area network according to the first wireless local area network profile.

10. An access point (101) according to claim 9, wherein the one or more processors are configured to cause the access point (101):
in dependence on receiving a second probe message from a second wireless client, the second probe message carrying a second SSID service set identifier, to send a second request message from the access point (101) to a server (103) of the access point (101) requesting a wireless local area network profile associated with the second SSID service set identifier;
in dependence on receiving a message carrying a second wireless local area network profile for the second SSID service set identifier at the access point (101) from the server (103), to use the first BSSID basic service set identifier to establish an association between the second wireless client and the access point (101) to provide access to the wireless local area network according to the second wireless local area network profile.

11. An access point (101) according to claim 9 or claim 10, wherein the one or more processors are configured to cause the access point to :
inhibit broadcast of at least the first and second SSID service set identifiers by using hidden SSID mode.

12. An access point (101) according to any one of claims 9 to 11, wherein the access point (101) is an access point for at least part of a multi-dwelling building and the server is a server for the multi-dwelling building.

13. An access point (1010according to any one of claims 9 to 12, wherein the one or more processors are configured to cause the access point to :
receive messages carrying wireless local area network profiles associated with a greater number of SSID service set identifiers at the access point from the server than a number of B SSID basic service set identifiers available for the access point.

14. An access point (101) according to any one of claims 9 to 13, wherein the or each BSSID basic service set identifier is a predetermined MAC address of the access point.

15. A non-transitory computer readable storage medium storing instructions executable by one or more processors to cause an access point (101) having at least one BSSID basic service set identifier to:
in dependence on receiving a first probe message from a first wireless client (102), the first probe message carrying a first SSID service set identifier, to send a first request message to a server (103) of the access point (101) requesting a wireless local area network profile associated with the first SSID service set identifier;
in dependence on receiving a message carrying a first wireless local area network profile for the first SSID service set identifier from the server (103), to use a first BSSID basic service set identifier of the plurality of BSSID basic service set identifiers to establish an association between the first wireless client (102) and the access point (101) to provide access to a wireless local area network according to the first wireless local area network profile.
